# EUROPEAN PATENT APPLICATION

(11) **EP 1 806 479 A2**
(43) Date of publication of application: **11.07.2007**
(21) Application number: 06126861.1
(22) Date of filing: 21.12.2006
(51) Int. Cl.: F01D 5/18, F01D 9/06, F02C 3/13, F01D 25/12

(54) **Gas turbine engine and method of operation thereof**

(30) Priority: 05.01.2006 US 325861
(71) Applicant: General Electric Company, Schenectady, NY 12345 (US)
(72) Inventor: MAIER, Mark Stefan, Greer, SC 29650 (US); WEST, James Anthony, Simpsonville, SC 29681 (US); JOHNSON, David Martin, Simpsonville, SC 29680 (US); MARTIN, Devin, Missouri City, TX 77459 (US)
(74) Representative: Illingworth-Law, William Illingworth

(57) **Abstract**

Disclosed herein is a method for enabling turn down of a turbine engine (10), comprising: extracting compressor discharge air (25) from a working fluid path (94) before it enters a combustion zone (23) of the turbine engine (10); and reintroducing the extracted air (25) to the working fluid path (94) downstream of a combustor exit (46). Further disclosed herein is a gas turbine (10), comprising: a compressor section (14), one or more combustors (30) downstream from the compressor section (14), a turbine section (44) downstream from the compressor section (14); and at least one conduit (54,72) for extracting compressor discharge air (25) from a working fluid path (94) prior to a combustion zone (23) and reintroducing the extracted air (25) to the working fluid path (94) downstream of a combustor exit (46) in response to the turbine (10) being in a turned down condition.

## Description

### BACKGROUND OF THE INVENTION

This invention relates generally to rotary machines and, more particularly, to methods for improving the ability to operate at low loads. Many known combustion turbine engines burn a hydrocarbon-air mixture in a combustor assembly and generate a combustion gas stream that is channeled to a turbine assembly. The turbine assembly converts the energy of the combustion gas stream to torque that may be used to power a machine, for example, an electric generator or a pump. In many cases the engine is coupled to a generator who's rotational speed is a fixed rate that is defined by the electrical frequency of the electric grid. The temperature of the combustion gas stream is referred to as the combustor exit temperature. A common range of combustion gas stream temperatures is approximately 2400°F to 2600°F. In some of these engines, a lower temperature limit may exist due to the ability of the combustor to completely burn the hydro-carbon fuel at low temperatures. When the combustion process is not completed, high levels of carbon-monoxide (CO) will exist in the turbine exhaust system. High CO emission levels are prohibited by regulatory agencies. Typically, when a turbine is operated at a high load, the combustor exit temperature is high and CO emissions are held to a minimum. As turbine load is decreased, it is necessary, in many gas turbines, to reduce the combustor exit temp, which may result in increased CO emissions. To prevent this increase in CO emissions it is desired to employ a method that can maintain high combustor temperatures while the engine is at low loads.

In order to maintain the emissions below a desired limit, the combustor exhaust temperature must be maintained within a specific range. Since the structural integrity of turbine hot gas path components such as nozzles and buckets is related to working fluid flow velocity and temperature, and coolant temperature and flow rate, managing the gas turbine generator load reduction can have significant life benefits while meeting the stringent regulatory emissions requirements.

### BRIEF DESCRIPTION OF THE INVENTION

Disclosed herein is a method for enabling turn down of a turbine engine, comprising: extracting compressor discharge air from a working fluid path before it enters a combustion zone of the turbine engine; and reintroducing the extracted air to the working fluid path downstream of a combustor exit.

Further disclosed herein is an apparatus related to a gas turbine, comprising: a compressor section, one or more combustors downstream from the compressor section, a turbine section downstream from the compressor section; and at least one conduit for extracting compressor discharge air from a working fluid path prior to a combustion zone and reintroducing the extracted air to the working fluid path downstream of a combustor exit in response to the turbine being in a turned down condition.

### BRIEF DESCRIPTION OF THE DRAWINGS

The following descriptions of embodiments, provided by way of example only, should not be considered limiting in any way. With reference to the accompanying drawings, like elements are numbered alike:
FIG. 1 depicts a partial cross sectional view of a gas turbine engine in accordance with an embodiment of the invention;
FIG. 2 depicts the first stage nozzle area and a method of delivering the bypass air to the turbine flowpath of FIG. 1; and
FIG. 3 depicts an exploded view of a first stage nozzle and inserts in accordance with an embodiment of the invention.

### DETAILED DESCRIPTION OF THE INVENTION

Gas turbines generally include a compressor section, a combustion section and a turbine section. The compressor section is driven by the turbine section typically through a common shaft connection. The combustion section typically includes an array of spaced combustors. A fuel/air mixture is burned in each combustor to produce a hot energetic gas, which flows through a transition piece to the turbine section. For purposes of the present description, only one combustor is discussed and illustrated, it being intended that any number of the other combustors arranged about the turbine can be substantially identical to the first including all combustors being substantially identical to one another.

It should be appreciated by those skilled in the art that alternate embodiments of the invention may be applied to machines with multiple shaft turbines and to those with single chamber combustor sections, which may be annular or may be positioned non-symmetrically around the machine.

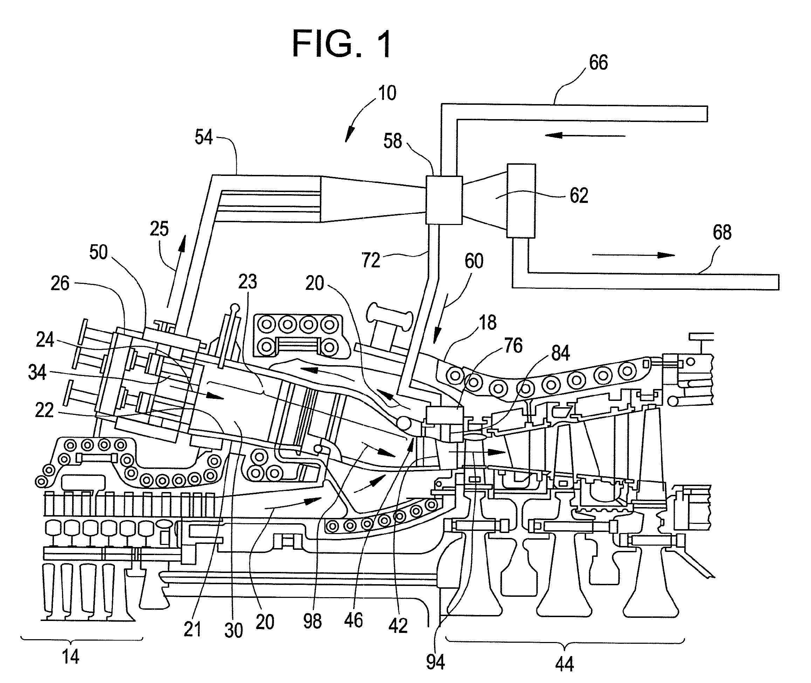

Referring to FIG. 1, a gas turbine engine according to an embodiment of the invention is depicted generally at 10. Working fluid, illustrated here as compressor discharge air 20, from a compressor section 14 is contained within the turbine engine 10 by an engine casing 18. A portion of the compressor discharge air 20, referred to as combustor air 24, flows into a combustor 30. The combustor air flows axially along an outside wall 21 of the combustor liner 22 into a combustor head 26. Most of head end air then enters fuel injectors 34 where it is mixed with fuel before being combusted in a combustion zone 23 inside a combustor liner 22. Another portion of the air in the combustor head 26 becomes cooling fluid illustrated here as extracted air 25. After combustion, combustion gases 98 travel through a transition piece 38 and a section of the combustor known as a combustor exit 46 before passing through a first stage nozzle 42 and into a turbine section 44.

The combustion process takes place within the combustor 30, and the parameters necessary to meet desired emissions limits are substantially controlled within the combustor 30. It has been determined that the temperature of the combustion process plays a key role in whether or not an engine meets the desired emissions limits. The temperature at the combustor exit 46, in particular, has a strong correlation to emissions output, in that, if the combustor exit 46 temperature falls below a certain level, the emissions quickly increase. The combustor exit 46 temperature depends on factors such as, air flow and fuel flow, for example. By reducing both the air flow and the fuel flow, the total amount of air and fuel that combust in the combustor 30 is decreased resulting in a decreased level of enthalpy entering the turbine. This reduction in enthalpy causes a reduction in engine output at a constant speed. In this case, since the air fuel ratio is maintained at acceptable levels, the temperature of the combustor exit 46 is also maintained thereby preserving an acceptable level of emissions.

It should be appreciated by those skilled in the art that embodiments of the invention may be applied to machines that reduce their load with turbine variable vanes configurations, compressor variable guide stator configuration and gas turbine variable rotor speed configuration.

An embodiment of the invention maintains the air fuel ratio in the combustion zone 23 by varying the amount of extracted air 25 for a given level of fuel delivered to the nozzle 34. More specifically, the extracted air 25 is removed from somewhere upstream of the combustion zone 23, by porting it into extraction sleeve 50. It is then ported through an extraction conduit 54, which may be insulated, and an optional valve 27 and is combined with extracted air from the other combustor heads 26; if more than one combustor head 26 is having air extracted, before being fed to a booster pump 58. Although this embodiment illustrates the use of a booster pump 58, it should be understood that embodiments without a booster pump 58 may also be utilized as will be described in more detail below. Additionally, alternate embodiments may use the valve 27 to vary the amount of extracted air 25 without the pump 58, and still other embodiments may use the valve 27 and the pump 58, however when both the valve 27 and the pump 58 are used the pump 58 should be of the non-positive displacement type thereby allowing the flow variation to be controlled by the valve 27. It should be appreciated, by one skilled in the art, that it is not necessary to extract air from all combustor heads 26, of a turbine engine 10, however, if balancing of air flow through all combustors 30 is desired, then it is an option. The booster pump 58 is located outside of the engine casing 18 and is driven by a pump driver 62. The pump driver 62 may be any motive system for example a variable speed electric motor or a steam turbine. If a steam turbine is used then expanding steam from a heat recovery steam generator (HRSG) of a combined cycle power plant, for example, as is shown in FIG. 1 may be supplied from the HRSG through supply conduit 66 and returned to HSRG through return conduit 68. The booster pump 58 may operate over a wide range of speeds. By using a Roots pump, which puts out a given volume flow rate based on its rotational speed, as the booster pump 58, a pump outlet flow 60 can be predictably controlled. It should be appreciated, by one skilled in the art, that a plurality of booster pumps 58 may be used thereby allowing pumping of air to continue during down time of a single booster pump 58.

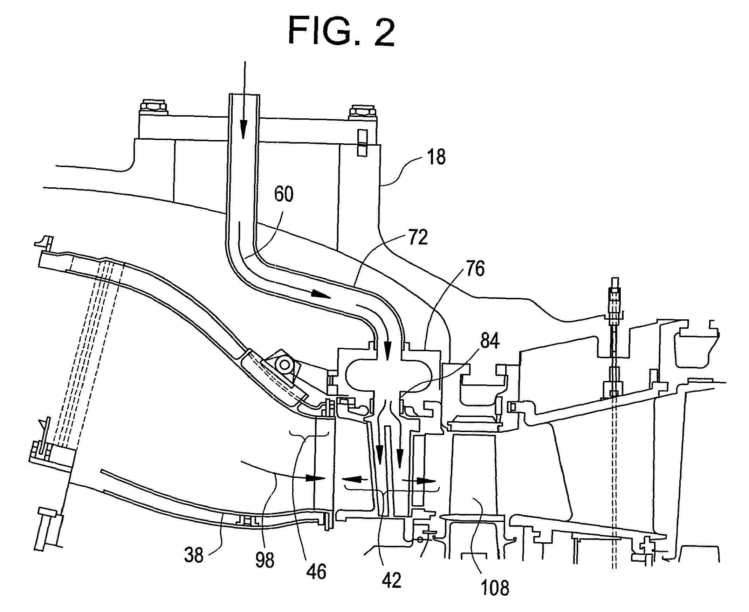

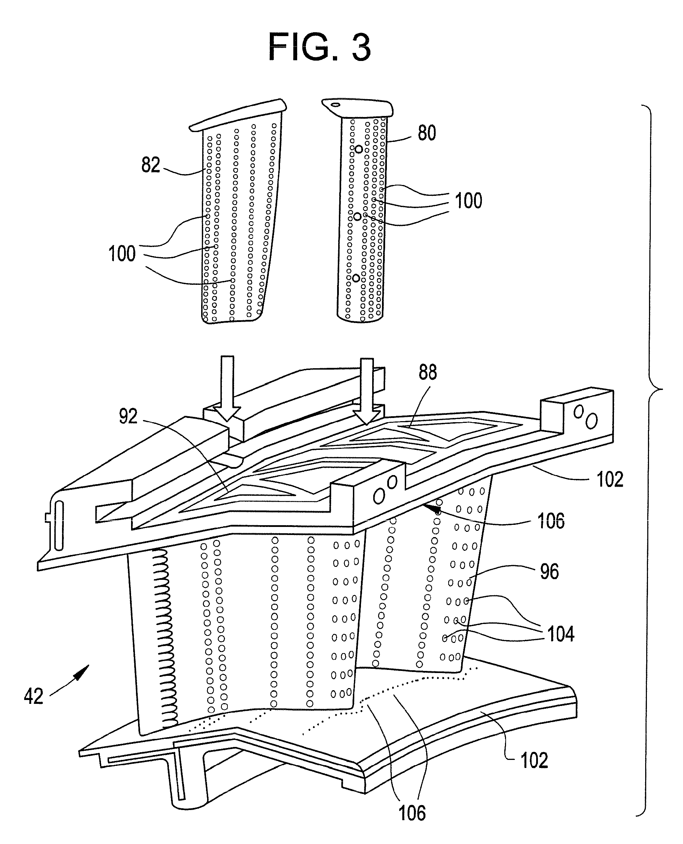

The pressurized outlet flow 60 is then directed back through a return conduit 72 and enters a working fluid path 94 through the first stage nozzle 42. By reintroducing the outlet flow 60, downstream of the combustor exit 46, to a first stage nozzle airfoil 96 and platform 102, the air enters the working fluid path 94 without having a significant impact on the temperature profile at the axial plane of the nozzle trailing edge. Establishing a proper ratio of airfoil 96 and platform 102 flow will allow the system to minimize the impact to the critical core flow temperature profile. A change to a temperature profile for a hot gas path piece of hardware (Figures 2 and 3) will result in a local temperature spike that results in a reduction of the down stream hot gas path part lives.

An embodiment of the invention introduces the outlet flow 60 into the working fluid path 94 in a way that will reduce the average temperature of the turbine working fluid path 94 while minimizing the impact on the temperature profile. This reduction in the average temperature results from the outlet flow 60 mixing with the combustion gases 98 resulting in a lower average temperature and extending the life of the turbine hardware.

Referring now to Figures 2 and 3, the pump outlet flow 60 cools the hot gas path components illustrated in this embodiment as, a first insert 80, a second insert 82, the first stage nozzle airfoil 96, thereby extending their operational life. It should be appreciated that other embodiments may port the pump outlet flow 60 to nozzles later than the first stage while still falling within the scope of the invention. The return conduit 72, which may be insulated, ports the pump outlet flow 60 through the engine casing 18 and into a manifold 76 that surrounds the turbine engine 10 peripherally outside of the first stage nozzles 42. A cross over tube 84 fluidly connects the manifold 76 to the first stage nozzles 42. Pump outlet flow 60 flows into both the first insert 80 and the second insert 82 that are inserted into a first cavity 88 and a second cavity 92, respectively, of an airfoil 96 of the first stage nozzle 42. Impingement holes 100 formed in the inserts 80, 82 and cooling holes 104 formed in the airfoil 96, and cooling holes 106 in the platform 102, allow pump outlet flow 60 to flow therethrough such that it mixes with combustion gases 98 exiting the transition piece 38 of the combustor 30. The sizing of the cooling holes 104 and 106 can result in a proportioning of the reintroduction of the pump outlet flow 60 in such a way to improve uniformity of cooling of the hot gas path components, thereby extending their operational life. It should also be appreciated, as noted above, that an embodiment of the invention may not use a pump 58 at all and may rely on the differences in pressure from the combustor head 26 to the first stage nozzle 42 to draw compressor discharge air 20 through conduits 54, 72 to the first stage nozzle 42.

In the exemplary embodiment illustrated, in addition to increasing the cooling of the hot gas path components, recombining all of the extracted air 25 (cooling fluid) with the combustion gases 98, prior to the first stage nozzle 42, assures that maximum power production will be achieved since all compressor discharge air 20 (working fluid) will pass through all of the turbine sections 44 of the gas turbine engine 10.

A doubling of the pump outlet flow 60 through the first stage nozzle 42 will allow a significant extension of engine turn down. To minimize an increase in pressure inside the first stage nozzle 42 at double the pump outlet flow 60, diameters of the impingement holes 100, in the inserts 80, 82, and the cooling holes 104 in the nozzle airfoil 96 and/or platform 102 should be sized to meet the back pressure requirements of the booster pump 58

Some advantages of some embodiments of the invention include: increase in the range of engine turn down while meeting desire emission limits, improved and uniform cooling of hot gas path components, increased life of hot gas path components, and reduced fuel consumption at low loads.

While the embodiments of the disclosed method and apparatus have been described with reference to exemplary embodiments, it will be understood by those skilled in the art that various changes may be made and equivalents may be substituted for elements thereof without departing from the scope of the embodiments of the disclosed method and apparatus. In addition, many modifications may be made to adapt a particular situation or material to the teachings of the embodiments of the disclosed method and apparatus without departing from the essential scope thereof. Therefore, it is intended that the embodiments of the disclosed method and apparatus not be limited to the particular embodiments disclosed as the best mode contemplated for carrying out the embodiments of the disclosed method and apparatus, but that the embodiments of the disclosed method and apparatus will include all embodiments falling within the scope of the appended claims.

## Claims

1. A method for enabling turn down of a turbine engine (10), comprising:
extracting compressor discharge air (25) from a working fluid path (94) before it enters a combustion zone (23) of the turbine engine (10); and
reintroducing the extracted air (25) to the working fluid path (94) downstream of a combustor exit (46).

2. The method of claim 1, further comprising:
pumping the extracted air (25) with a pump (58) driven with the turbine engine (10); and
varying the pump (58) speed to vary flow rates of extracted air (25) to maintain air fuel ratio.

3. The method of claim 2 wherein the pump (58) is integral to the turbine engine (10).

4. The method of claim 1, further comprising:
varying extracted flow rates with a valve (27) to maintain air fuel ratio.

5. The method of claim 1, further comprising:
acquiring the extracted air (25) from a combustor head (26);
reintroducing the extracted air (25) into a first stage nozzle (42) through holes (104) in an airfoil (96) and holes (106) in a platform (102) of the nozzle (42);
sizing the holes (104) in the airfoil (96) and the holes (102) in the platform (102) to proportion air flow therethrough to improve uniformity of cooling; and
maintaining adequate combustor (30) temperatures to meet desired emissions levels.

6. A gas turbine, comprising:
a compressor section (14);
one or more combustors (30) downstream from the compressor section (14);
a turbine section (44) downstream from the compressor section (14); and
at least one conduit (54,72) for extracting compressor discharge air (25) from a working fluid path (94) prior to a combustion zone (23) and reintroducing the extracted air (25) to the working fluid path (94) downstream of a combustor exit (46) in response to the turbine (10) being in a turned down condition.

7. The gas turbine of claim 6, wherein:
a pump (58) pumps the extracted air (25);
the pump (58) is driven by the gas turbine (10);
the pump (58) speed is variable to vary the flow rates of the extracted air (25); and
the pump (58) is integral to the turbine (10).

8. The gas turbine of claim 6, wherein:
the conduits (54, 72) are fluidically connected to at least one combustor head (26).

9. The gas turbine of claim 6, wherein:
the extracted air (25) is reintroduced through a nozzle (42).

10. The gas turbine of claim 9, wherein:
the extracted air (25) is reintroduced through holes (104) in at least one airfoil (96) and holes (106) in at least one platform (102) of the nozzle (42).
